# EUROPÄISCHE PATENTSCHRIFT

(11) **EP 0 770 015 B1**
(45) Veröffentlichungstag und Bekanntmachung des Hinweises auf die Patenterteilung: **16.09.1998**
(21) Anmeldenummer: 95923328.9
(22) Anmeldetag: 14.06.1995
(51) Int. Cl.: B62D 5/32

(54) **VERFAHREN ZUR BETÄTIGUNG DER LENKZYLINDER MOBILER ARBEITSMASCHINEN SOWIE LENKSYSTEM FÜR MOBILE ARBEITSMASCHINEN**
PROCESS FOR ACTUATING THE STEERING CYLINDERS OF MOBILE PLANT AND STEERING SYSTEM THEREFOR
PROCEDE D'ACTIONNEMENT DES VERINS DE BRAQUAGE DE MACHINES DE TRAVAIL MOBILES ET SYSTEME DE DIRECTION POUR MACHINES DE TRAVAIL MOBILES

(30) Priorität: 08.07.1994 DE 4424063; 19.10.1994 DE 4437301
(43) Veröffentlichungstag der Anmeldung: 02.05.1997
(73) Patentinhaber: O & K ORENSTEIN & KOPPEL AG, 13581 Berlin (DE)
(72) Erfinder: LEIDINGER, Gustav, D-86316 Friedberg (DE); KOLB, Walter, D-86152 Augsburg (DE)
(86) Internationale Anmeldenummer: EP9502311
(87) Internationale Veröffentlichungsnummer: WO9601760

(56) Entgegenhaltungen:
- EP-A- 0 044 065
- DE-A- 3 736 423
- AUTOMOTIVE ENGINEERING, Bd. 89, Nr. 9, September 1981 DALLAS, TEXAS, US, Seiten 46-51, 'Emergency steering: which system is the best?'

## Beschreibung

Die Erfindung betrifft ein Verfahren zur Betätigung der Lenkzylinder mobiler Arbeitsmaschinen, insbesondere von Radladern, Gradern, Mobilbaggern oder dgl. gemäß gattungsbildendem Teil des ersten Patentanspruches.

Radlader, aber auch andere Arbeitsmaschinen, ab einer bestimmten Größe weisen aufgrund von Sicherheitsanforderungen sowie gesetzlicher Bestimmungen zwei voneinander getrennte Lenksysteme auf. Dabei tritt das zweite System, vielfach als Notlenkanlage bezeichnet, nur dann in Funktion, wenn das erste System durch Störung oder Defekt die auslegungsgemäße Funktion nicht mehr zu erfüllen vermag. Es ist daher das erste System so auszulegen, daß es allein allen gesetzlichen und fahrtechnischen Anforderungen, speziell auch bei niedrigen Drehzahlen der Antriebsmaschine genügt. In diesem Betriebszustand ist das Notlenkungssystem funktionslos, weist jedoch wegen des ständigen Umpumpens seines Förderstromes einen Energiebedarf auf. Überdies sind aufwendige Zuschaltventile und Durchflußanzeiger erforderlich, die bei Ausfall des ersten Systems wirksam werden. Obwohl das Notlenksystem in der Regel nicht oder kaum zum Einsatz kommt und somit auch nicht effizient beaufschlagt wird, kann es nun vorkommen, daß dieses System eher ausfällt als das Hauptlenksystem, so daß auch dessen Ausfall angezeigt werden muß. Darüber hinaus sind durch die zusätzlichen Bauteile, wie Zuschaltventile und Durchflußanzeiger, Druckverluste gegeben, die sich nachteilig auf die Energiebilanz auswirken.

Der EP-A 44 065 ist ein hydraulisches Lenksystem zu entnehmen, welches zwei Pumpen, insbesondere Konstantpumpen, beinhaltet, die im Sinne einer Priorität Ölströme zu einem nachgeschalteten Lenkgetriebe in Form eines Ventils leiten. Die Kontrollen erfolgt hierbei durch sogenannte Prioritätsventile. Sofern in dem Hydraulik-Lenkkreis kein oder nur wenig Öl benötigt wird, wird dieses Öl Sekundärverbrauchern zugeleitet. In den Zuleitungen von den Pumpen zur gemeinsamen zum Lenkgetriebe führenden Druckleitung sind Rückschlagventile eingebaut.

In der Zeitschrift 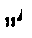 Automotive Engineering", Vol. 89 (1981) Sept. Nr. 9 sind auf den Seiten 46-51 Notlenksystem für Baumaschinen beschrieben. U.a. ist in Figur 3 auf Seite 48 ein Lenksystem dargestellt, welches eine Haupt- und eine Nebenpumpe (Konstantpumpen) beinhaltet, deren Einzelölströme über eine gemeinsame Druckleitung dem nachgeschalteten Lenkgetriebe zur Verfügung gestellt werden. Auch hier sind in den Einzelleitungen Rückschlagventile vorgesehen, die jedoch bei Ausfall der Nebenpumpe ein Abfließen des von der Hauptpumpe gelieferten Ölstromes zu Sekundärverbrauchern verhindern sollen. Zumindest in einer der Einzelleitungen ist ein Druckschalter vorgesehen. Die Nebenpumpe speist hierbei nur ein, wenn die Hauptpumpe ausfällt. Eine Rückwärtsfahrt der Baumaschinen unter Einbeziehung des Notlenksystems ist hierbei nicht möglich.

In beiden Druckschritten werden Lenk- bzw. Notlenksysteme unter Verwendung von Konstantpumpen beschrieben, die nicht im Sinne der klassischen Load-Sensing-Steuerung in unterschiedlicher Weise betrieben werden können, so daß erst durch Einsatz weiterer Hilfsmittel (wie z.B. Prioritätsventile oder dgl.) das Lenk- bzw. das Notlenkverhalten realisiert werden kann.

Ziel der Erfindung ist es, ein Verfahren zur Betätigung der Lenkzylinder mobiler Arbeitsmaschinen sowie ein Lenksystem für mobile Arbeitsmaschinen dahingehend weiterzubilden, daß die vorab beschriebenen Nachteile weitestgehend vermieden werden, dies insbesondere bei bestimmten Betriebsbedingungen, wie z.B. niedrigen Drehzahlen der Antriebsmaschine.

Dieses Ziel wird einerseits durch die verfahrensgemäßen Merkmale gemäß Kennzeichen des ersten Patentanspruches erreicht.

Vorteilhafte Weiterbildungen des erfindungsgemäßen Verfahrens sind den zugehörigen Unteransprüchen zu entnehmen.

Das Ziel wird desweiteren durch das Kennzeichen des nebengeordneten gegenständlichen Anspruches erreicht.

Vorteilhafte Weiterbildungen des erfindungsgemäßen Lenksystems sind den zugehörigen Unteransprüchen zu entnehmen.

Dadurch, daß beide Lenksysteme nun miteinander kontinuierlich bzw. diskontinuierlich in Abhängigkeit vorgegebener Betriebszustände load-sensing-gesteuert zusammenarbeiten können, kann auch ein ausreichender Förderstrom bei niedriger Drehzahl der Antriebsmaschine gewährleistet werden.

Durch die Erfindung werden folgende Vorteile erzielt:
- das erste Lenksystem, speziell dessen Pumpe(n) kann bzw. können kleiner dimensioniert werden,
- aufwendige Zuschalteinrichtungen, wie Ventile oder dgl., für das bisherige Notlenksystem können entfallen,
- der Durchflußanzeiger kann ebenfalls entfallen, weil der Ausfall eines jeden der beiden Systeme auf einfache Weise angezeigt wird,
- bei Nichtbenötigen des zweiten Systems kann dessen Energieaufwand verringert werden,
- das gesamte System Lenkung kann wesentlich vereinfacht werden,
- als Folge daraus können ebenfalls die Kosten hierfür gesenkt werden.

Als bevorzugtes Anwendungsgebiet wird erfindungsgemäß auf Pumpen mit einem aus dem Nullhub heraus verstellbaren Fördervolumen (Verstellpumpen) zurückgegriffen, welche Druck- und Förderstromregler in bei lastdruckunabhängigen Systemen (Load-Sensing-Systemen) üblicher Form aufweisen. In die Förderleitungen der Pumpen sind Rückschlagelemente, insbesondere Rückschlagventile eingebaut, die verhindern sollen, daß bei Auftreten eines Schadens im Bereich einer der Pumpen die andere ihren Ölstrom über diese in den Tank zurückfördert. In den Förderleitungen steht in jedem Betriebszustand mindestens der Load-Sensing-Differenzdruck des Pumpenreglers an, der nach praktischer Auslegung bei ca. 12-20 bar liegt. Durch diesen Druck werden die Druckwächter, insbesondere Druckschalter betätigt, deren Schaltdruck auf einen Wert deutlich unter den genannten LS-Druck eingestellt wird. Bei Ausfall einer der Pumpen, wenn diese also keinen Druck mehr aufbauen kann, geht der entsprechende Schalter in seine Ruhestellung zurück. Über diesen wird der Pumpenausfall (wie gesetzlich vorgeschrieben) dem Fahrer optisch und/oder akustisch angezeigt.

Zur Erhaltung einer kontrollierten Aufteilung der anteiligen Förderströme sollten die Load-Sensing-Drücke für die einzelnen Pumpen unterschiedlich gewählt werden, z.B. in der Größenordnung von 2-4 bar. Durch diese Maßnahme wird erreicht, daß die Pumpe mit der höheren Druckeinstellung jeweils den benötigten, d.h. über die Drehgeschwindigkeit des Lenkrades abgeforderten Förderstrom liefert, wobei die andere Pumpe(n) auf die Nullhub-Stellung dabei zurückgedrängt wird bzw. werden. Erst wenn die fördernde Pumpe ihren maximalen Ausschwenkwinkel und damit bei gegebener Antriebsdrehzahl größtmöglichen Förderstrom erreicht hat, beginnt die Folgepumpe auszuschwenken und ihren Anteil am Förderstrom beizusteuern. Durch das hintereinander erfolgende Ausschwenken der einzelnen Pumpen wird auch die Schwingungsneigung im gesamten Kreislauf gedämpft, wohingegen bei gleichzeitiger Auslenkung aller Pumpen ein solches System zu Druckschwingungen neigen könnte.

Falls gesetzliche Bestimmungen es erfordern, daß die Folgepumpe(n) über einen mit den Rädern des Fahrzeuges fest verbundenen Teil des Antriebsstranges angetrieben wird, um auch nach Ausfall des Antriebsmotors noch die Lenkbarkeit des rollenden Fahrzeuges zu gewährleisten, und wenn dabei auch noch die Lenkbarkeit des Fahrzeuges bei Rückwärtsfahrt aufrechterhalten werden muß, dann sollte einem weiteren Gedanken der Erfindung gemäß diese Folgepumpe von solcher Bauart sein, daß sie ihren Förderstrom bei Antrieb in beiden Drehrichtungen abgeben kann. Auch hier sind entsprechende Rückschlagventile und Druckschalter vorgesehen, die analog zur bisher beschriebenen Bauform vorgesehen sind. Die Folgepumpe(n) saugt bzw. saugen ihr Öl über ein jeder Drehrichtung zugeordnetes Nachsaugventil an.

Über dieses wird bzw. werden die Folgepumpe(n) an ihrem mit der Drehrichtung jeweils wechselnden Sauganschluß mit Öl versorgt.

Die Erfindung ist anhand eines Ausführungsbeispieles in der Zeichnung dargestellt und wird wie folgt beschrieben:
- Figur 1 -: Lenksystem mit zwei Verstellpumpen, die von einem gemeinsamen Antriebsmotor angetrieben werden
- Figur 2 -: Lenksystem mit zwei Verstellpumpen, von denen eine über einen mit den Rädern des Fahrzeuges fest verbundenen Teil des Antriebsstranges angetrieben wird.

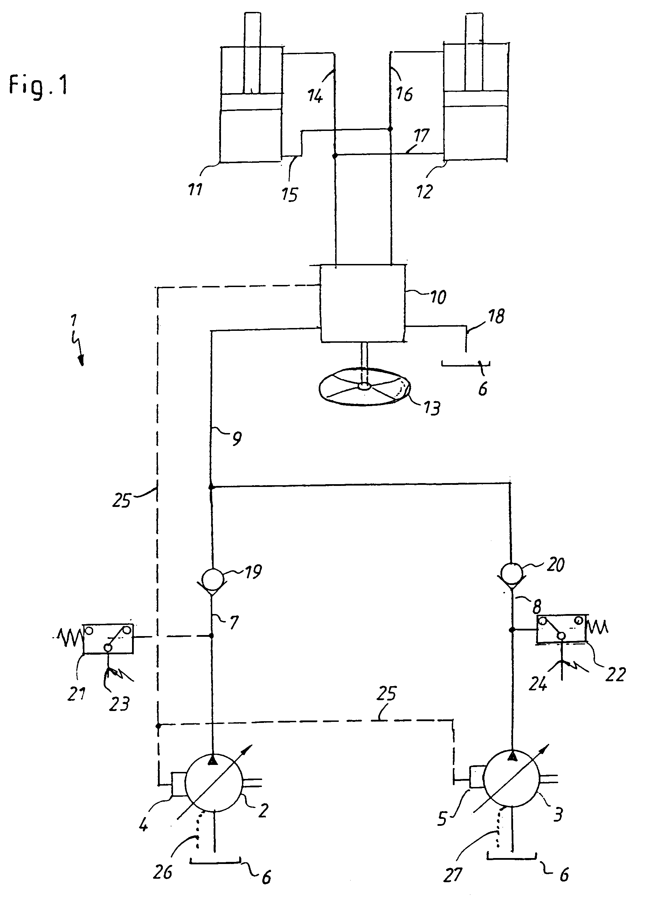

Figur 1 zeigt ein Lenksystem 1, das im wesentlichen folgende Bauteile beinhaltet: zwei Pumpen 2,3 mit einem einem aus dem Nullhub heraus verstellbaren Fördervolumen, die Druck- und Förderstromregler 4,5 in bei lastdruckunabhängigen Systemen (Load-Sensing-Systemen) üblicher Form aufweisen. Die Pumpen 2,3 saugen das Hydraulikmedium aus dem Tank 6 an und fördern das Hydraulikmedium über die zugehörigen Druckleitungen 7,8 in eine gemeinsame Förderleitung 9. Das Hydraulikmedium wird nun einem handelsüblichen Lenkgetriebe 10 zur Verfügung gestellt, von wo aus Lenkzylinder 11,12 bei Betätigung des Lenkrades 13 drehrichtungsabhängig über die Leitungen 14,15 bzw. 16,17 beaufschlagt werden. Das beim Lenkvorgang aus den Zylindern 11,12 verdrängte Hydraulikmedium wird über die Leitung 18 in den Tank 6 zurückgefördert. In die Förderleitungen 7,8 der Pumpen 2,3 sind Rückschlagventile 19,20 eingebaut, die verhindern sollen, daß bei Auftreten eines Schadens im Bereich einer der Pumpen 2 oder 3 die andere 3 oder 2 ihren Ölstrom über diese in den Tank 6 zurückfördert. In den Förderleitungen 7,8 steht in jedem Betriebszustand mindestens der Load-Sensing-Differenzdruck des Pumpenreglers 4,5 an, der nach praktischer Auslegung in diesem Beispiel 20 bar betragen soll. Durch diesen Druck werden zwischen den Pumpen 2,3 und den Rückschlagventilen 19,20 angeordnete Druckschalter 21,22 betätigt, deren Schaltdruck auf einen Wert deutlich unter dem genannten Load-Sensing-Druck eingestellt wird.

Bei Ausfall einer der Pumpen 2 oder 3 geht der entsprechende Druckschalter 21 oder 22 in seine Ruhestellung zurück. Über diesen wird der Pumpenausfall dem Fahrer optisch oder auch akustisch über die nur angedeuteten Signalleitungen 23,24 angezeigt. Die Load-Sensing-Leitung 25 zwischen Lenkgetriebe 10 und den Pumpenreglern 4,5 ist hierbei gestrichelt dargestellt. Ferner gestrichelt dargestellt sind die Leckage-Leitungen 26,27 der Pumpen 2 und 3, die zum Tank 6 führen.

Bei gleichen Load-Sensing-Differenzdruckeinstellungen an den Pumpenreglern 4 und 5 würde es bereits von ganz geringen Einstellung- oder Druckunterschieden in den Signalleitungen 25 abhängen, welchen Anteil jede Pumpe 2,3 zum gesamten Förderstrom beisteuert. Um eine kontrollierte Aufteilung zu erhalten, wird man daher die Load-Sensing-Drücke z.B. in der Größenordnung von 2-4 bar unterschiedlich wählen (z.B. 20 bar für die Pumpe 2 und 16 bar für die Pumpe 3). Dadurch wird erreicht, daß die Pumpe 2 mit der höheren Druckeinstellung jeweils den benötigten, d.h. über die Drehgeschwindigkeit des Lenkrades 13 abgeforderten Förderstrom liefert, wobei die andere Pumpe 3 in ihre Nullhub-Stellung zurückgedrängt wird. Erst wenn die zunächst allein fördernde Pumpe 2 ihren maximalen Ausschwenkwinkel und damit bei gegebener Antriebsdrehzahl größtmöglichen Förderstrom erreicht hat, beginnt die andere Pumpe 3 auszuschwenken und ihren Anteil am Förderstrom beizusteuern. Dieses hintereinander erfolgende Ausschwenken der Pumpen 2 und 3 dämpft auch die Schwingungsneigung im gesamten Hydraulikkreislauf, wohingegen bei gleichzeitiger Auslenkung von beiden Pumpen 2,3 das System zu Druckschwingungen neigen würde.

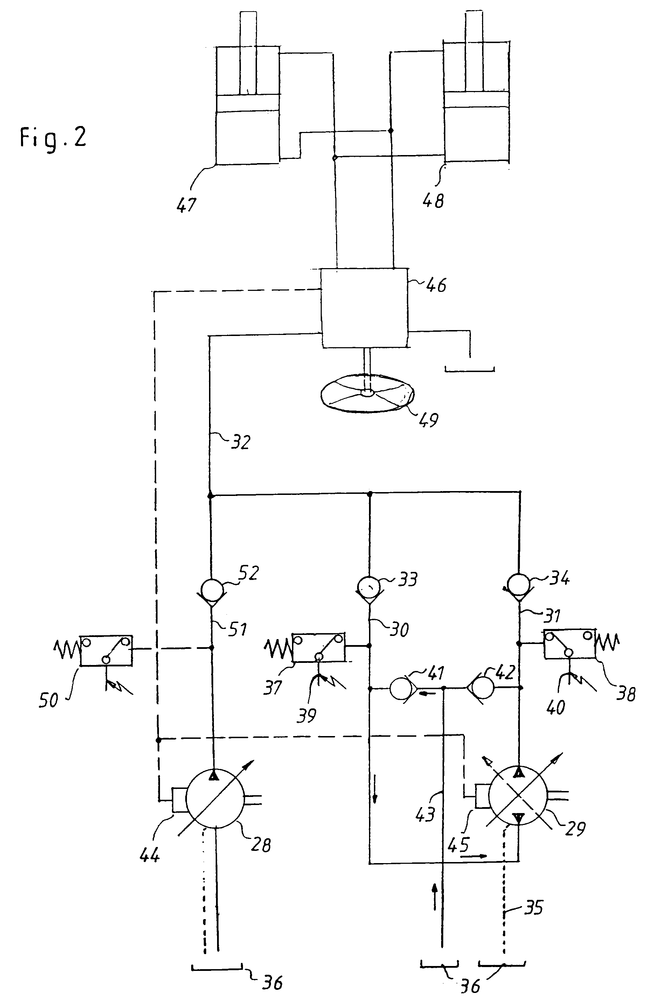

Figur 2 zeigt ein alternative Ausführungsbeispiel, das zwar auch zwei Verstellpumpen 28,29 beinhaltet, die jedoch nicht wie in Figur 1 beschrieben von einem gemeinsamen Antriebsmotor sondern von verschiedenen Antriebselementen angetrieben werden. Die Verstellpumpe 29 wird in diesem Ausführungsbeispiel über einen mit den hier nicht weiter dargestellten Rädern der Arbeitsmaschine fest verbundenen Teil des Antriebsstranges angetrieben, um auch nach Ausfall des Antriebsmotors für die Verstellpumpe 28 noch die Lenkbarkeit der rollenden Arbeitsmaschine zu gewährleisten. Darüber hinaus ist die Verstellpumpe 29 in der Lage, daß sie ihren Förderstrom bei Antrieb in beide Drehrichtungen abgeben kann, um auf diese Art und Weise auch die Lenkbarkeit der Arbeitsmaschine bei Rückwärtsfahrt aufrecht erhalten zu können. Je nach Drehrichtung fördert die Verstellpumpe 29 entweder über die Leitung 30 oder aber die Leitung 31 in die mit der anderen Verstellpumpe 28 gemeinsame Leitung 32. Jede der je nach Fahrtrichtung und damit Drehsinn der Pumpe 29 zur Förderleitung werdenden Leitungen 30 oder 31 weist ein Rückschlagventil 33,34 auf, wobei deren Aufgabe die gleiche wie nach Figur 1 ist, nämlich zu verhindern, daß nach einem Schaden der Pumpe 29 die Pumpe 28 ihr Öl direkt über die Leckageleitung 35 der Pumpe 29 in den Tank 36 fördern kann.

An jede der beiden Leitungen 30,31 ist ein Druckschalter 37,38 angeschlossen, von denen jeweils einer je nach Drehsinn der Pumpe 29 mindestens mit dem Load-Sensing-Differenzdruck beaufschlagt wird. Erst bei Ausfall der Pumpe 29, wenn diese also keinen Druck mehr aufbauen kann, gehen beide Druckschalter 37 und 38 in ihre Ruhestellung. Über eine entsprechende Schaltlogik wird über die nur angedeuteten Signalleitungen 39,40 der Pumpenausfall dem Fahrer akustisch und/oder optisch angezeigt. Die Pumpe 29 saugt ihr Öl je nach Drehrichtung über die Nachsaugventile 41,42 und die Zuführleitung 43 aus dem Tank 36 an. In diesem Beispiel ist anhand von Pfeilen der Förderfluß des Hydraulikmediums in einer Richtung dargestellt. Der zusätzliche Förderstrom der Pumpe 29 wird in die gemeinsame Förderleitung 32 eingebracht.

Die Funktionsweise gemäß Figur 2 ist analog zu der gemäß Figur 1, wobei auch hier der Regler 44 einen höheren Load-Sensing-Differenzdruck aufweist als der Regler 45 der Pumpe 29. Diese Maßnahme bewirkt, daß zunächst einmal die Pumpe 28 allein fördert, bis sie ihren maximalen Ausschwenkwinkel und damit bei gegebener Antriebsdrehzahl größtmöglichen Förderstrom erreicht hat. Der Förderstrom wird über das Lenkgetriebe 46 den nachgeschalteten Lenkzylindern 47 und 48 zur Verfügung gestellt, wobei die entsprechenden Leitungen durch Änderung der Drehrichtung des Lenkrades 49 beaufschlagt werden. Der Druckschalter 50 sowie das in die Förderleitung 51 eingesetzte Rückschlagventil 52 übernehmen hierbei die gleichen Funktionen wie in Figur 1 beschrieben.

## Patentansprüche

1. Verfahren zur Betätigung der Lenkzylinder (11,12,47,48) mobiler Arbeitsmaschinen, insbesondere von Radladern, Gradern, Mobilbaggern oder dgl., indem der Förderstrom mindestens zweier Hydraulikpurnpen (2,3,28,29) kontinuierlich oder in Abhängigkeit vorgegebener Parameter diskontinuierlich zusammengeführt und dieser daraus resultierende Förderstrom mindestens einem die Lenkzylinder (11,12,47,48) betätigenden Lenkgetriebe (10,46) zugeleitet wird, wobei bei Ausfall einer der Pumpen (2 oder 3, 28 oder 29) ein Zurückfließen des Förderstromes der noch aktiven Pumpe (3 oder 2, 29 oder 28) durch mindestens ein in die jeweilige Druckleitung (7,8,30,31,51) der einzelnen Pumpen (2,3,28,29) eingesetztes Rückschlagelernent (19,20,33,34,52) verhindert wird, dadurch gekennzeichnet, daß bei Verwendung von Pumpen (2,3,28,29) mit aus dem Nullhub heraus verstellbarem Fördervolumen durch die Druck- und Förderstromregler (4,5,44,45) in den Förderleitungen (7,8,30,31,51) der einzelnen Pumpen (2,3,28,29) in jedem Betriebszustand mindestens der Load-Sensing-Differenzdruck aufgebracht wird, und daß die Load-Sensing-Differenzdrücke für die einzelnen Pumpen (2,3,28,29) unterschiedlich ausgelegt werden, so daß zunächst eine der Pumpen (2,28) den erforderlichen Förderstrom liefert und erst bei Erreichen ihres maximalen Ausschwenkwinkels mindestens eine weitere Pumpe (3,29) ausgeschwenkt wird und ihren jeweils dann noch benötigten Anteil am Gesamtförderstrom beisteuert.

2. Verfahren nach Anspruch 1, dadurch gekennzeichnet, daß der Druck in der jeweiligen Förderleitung (7,8,30,31,51) der einzelnen Pumpen (2,3,28,29) überwacht und bei Druckabfall im Bedienungsstand der Arbeitsmaschine ein optisches und/oder akustisches Signal ausgelöst wird.

3. Verfahren nach den Ansprüchen 1 und 2, dadurch gekennzeichnet, daß ein Load-Sensing-Differenzdruck von 12-20 bar angelegt wird.

4. Verfahren nach den Ansprüchen 1 bis 3, dadurch gekennzeichnet, daß den Druck messende Elemente (21,22,37,38,50) betätigt werden, deren Schaltdruck auf einen Wert eingestellt wird, der deutlich unter dem Load-Sensing-Druck liegt.

5. Lenksystem für mobile Arbeitsmaschinen, insbesondere für Radlader, Grader, Mobilbagger oder dgl., mit mindestens zwei antreibbaren Hydraulikpumpen (28,29), mindestens einem Lenkgetriebe (46), einem oder mehreren Lenkzylindern (47,48) sowie die Pumpen (28,29), das Lenkgetriebe (46) und den bzw. die Zylinder (47,48) miteinander verbindende Hydraulikleitungen (30,31,51,32), wobei die einzelnen Hydraulikleitungen (30,31,51) zu einem gemeinsamen, mit dem Lenkgetriebe (46) in Verbindung stehenden Förderstrang (32) zusammengeführt und in den einzelnen Hydraulikleitungen (30,31,51) Rückschlagelemente (33,34,52) vorgesehen sind, dadurch gekennzeichnet, daß die Pumpen (2,3,28,29) Druck- und Förderstromregler (4,5,44,45) aufweisende Verstellpumpen sind, und daß die Regler (4,5,44,45) der einzelnen Pumpen (2,3,28,29) auf vorgebbare, insbesondere unterschiedliche Load-Sensing-Differenzdrücke einstellbar sind.

6. Lenksystem nach Anspruch 5 dadurch gekennzeichnet, daß zwischen den einzelnen Pumpen (2,3,28,29) und den Rückschlagelementen (19,20,30,31,51) Druckwächter (21,22,33,34,52), insbesondere Druckschalter, angeordnet sind, die über entsprechende Signalleitungen (23,24,39,40) mit optischen und/oder akustischen Warnanzeigen im Bedienstand der Arbeitsmaschine verbunden sind.

7. Lenksystem nach einem oder mehreren der Ansprüche 5 und 6, dadurch gekennzeichnet, daß sofern eine der Pumpen (29) über einen mit den Rädern der Arbeitsmaschine fest verbundenen Teil des Antriebsstranges angetrieben wird und auch nach Ausfall des Antriebsmotors noch die Lenkbarkeit der rollenden Arbeitsmaschine in beiden Fahrtrichtungen gewährleistet werden soll, zumindest die mit dem Antriebsstrang verbundene Pumpe (29) von solcher Bauart ist, daß sie ihren Förderstrom bei Antrieb in beiden Drehrichtungen abgeben kann.

8. Lenksystem nach Anspruch 7, dadurch gekennzeichnet, daß die Pumpe (29) in Abhängigkeit der jeweiligen Drehrichtung des Lenkrades (49) ihren Förderstrom über eine zugehörige Förderleitung (30 oder 31) an die Gemeinschaftsleitung (32) abgibt.

9. Lenksystem nach Anspruch 8, dadurch gekennzeichnet, daß in beiden Förderleitungen (30,31) Rückschlagelemente (33,34) und Einrichtungen zur Drucküberwachung, insbesondere Druckschalter (37,38), vorgesehen sind.

10. Lenksystem nach den Ansprüchen 7 bis 9, dadurch gekennzeichnet, daß die Pumpe (29) Hydraulikmedium über eine Leitung (43) aus dem Tank (36) ansaugt, wobei die Förderleitungen (30,31) miteinander verbunden und in beiden Ausgangsrichtungen durch als Rückschlagelemente ausgebildete Nachsaugventile (41,42) vorgesehen sind.

## Claims

1. Method for actuating the steering cylinders (11, 12, 47, 48) of mobile machines, in particular of wheeled loaders, graders, mobile excavators or the like, in which the discharge flows of at least two hydraulic pumps (2, 3, 28, 29) are brought together continuously or, as a function of prescribed parameters, discontinuously, and the discharge flow resulting therefrom is fed to at least one steering gear unit (10, 46) actuating the steering cylinder (11, 12, 47, 48), it being the case that in the event of failure of one of the pumps (2 or 3, 28 or 29) back-flow of the discharge flow of the still active pump (3 or 2, 29 or 28) is prevented by at least one non-return element (19, 20, 33, 34, 52) fitted in the respective pressure line (7, 8, 30, 31, 51) of the individual pumps (2, 3, 28, 29), characterized in that when pumps (2, 3, 28, 29) are used with a discharge volume which can be adjusted from zero delivery, at least the load-sensing differential pressure is applied in each operating state by the pressure and discharge-flow controller (4, 5, 44, 45) in the discharge lines (7, 8, 30, 31, 51) of the individual pumps (2, 3, 28, 29), and in that the load-sensing differential pressures are designed differently for the individual pumps (2, 3, 28, 29), with the result that at first one of the pumps (2, 28) supplies the required discharge flow and not until it has reached its maximum swing-out angle is at least one further pump (3, 29) swung out and contributes its then respectively further required component to the total discharge flow.

2. Method according to Claim 1, characterized in that the pressure in the respective discharge line (7, 8, 30, 31, 51) of the individual pumps (2, 3, 28, 29) is monitored, and an optical and/or acoustic signal is triggered in the event of a pressure drop in the operating state of the machine.

3. Method according to Claims 1 and 2, characterized in that a load-sensing differential pressure of 12-20 bars is applied.

4. Method according to Claims 1 to 3, characterized in that elements (21, 22, 37, 38, 50) measuring the pressure are actuated whose switching pressure is set to a value which is conspicuously below the load-sensing pressure.

5. Steering system for mobile machines, in particular for wheeled loaders, graders, mobile excavators or the like, having at least two driveable hydraulic pumps (28, 29), at least one steering gear unit (46), one or more steering cylinders (47, 48) and hydraulic lines (30, 31, 51, 32) interconnecting the pumps (28, 29), the steering gear unit (46) and the cylinder or cylinders (47, 48), the individual hydraulic lines (30, 31, 51) being brought together to form a common discharge conduit (32) connected to the steering gear unit (46), and non-return elements (33, 34, 52) being provided in the individual hydraulic lines (30, 31, 51), characterized in that the pumps (2, 3, 28, 29) are variable displacement pumps having pressure and discharge-flow controllers (4, 5, 44, 45), and in that the controllers (4, 5, 44, 45) of the individual pumps (2, 3, 28, 29) can be set to prescribable, in particular different, load-sensing differential pressures.

6. Steering system according to Claim 5, characterized in that arranged between the individual pumps (2, 3, 28, 29) and the non-return elements (19, 20, 30, 31, 51) are pressure monitors (21, 22, 33, 34, 52), in particular pressure switches, which are connected via corresponding signal lines (23, 24, 39, 40) to optical and/or acoustic warning displays in the operating state of the machine.

7. Steering system according to one or more of Claims 5 and 6, characterized in that to the extent that one of the pumps (29) is driven via a part of the drive train which is permanently connected to the wheels of the machine, and that also after failure of the drive motor the steerability of the rolling machine is to be ensured in both directions of travel, at least the pump (29) connected to the drive train is of a design such that it can deliver its discharge flow when driven in either direction of rotation.

8. Steering system according to Claim 7, characterized in that the pump (29) delivers its discharge flow to the common line (32) via an associated discharge line (30 or 31) as a function of the respective direction of rotation of the steering wheel (49).

9. Steering system according to Claim 8, characterized in that non-return elements (33, 34) and devices for pressure monitoring, in particular pressure switches (37, 38), are provided in both discharge lines (30, 31).

10. Steering system according to Claims 7 to 9, characterized in that the pump (29) sucks hydraulic medium from the tank (36) via a line (43), the discharge lines (30, 31) being interconnected and being provided in both output directions by replenishing valves (41, 42) constructed as non-return elements.

## Revendications

1. Procédé pour actionner des vérins de braquage (11,12,47,48) d'engins mobiles de travail, notamment de chargeurs sur roues, des niveleuses, des excavatrices mobiles ou analogues, selon lequel les écoulements de refoulement d'au moins deux pompes hydrauliques (2,3,28,29) sont réunis continûment ou, en fonction de paramètres prédéterminés, d'une manière discontinue et cet écoulement de refoulement résultant est envoyé au moins à un mécanisme de direction (10,46), qui actionne les vérins de braquage (11,12,47,48), et selon lequel, en cas de défaillance de l'une des pompes (2 ou 3, 28 ou 29), un reflux de l'écoulement de refoulement de la pompe encore active (3 ou 2, 29 ou 28) est empêché par au moins un élément antiretour (19,20,33,34,52) inséré dans la canalisation respective de pression (7,8,30,31,51) des pompes individuelles (2,3,28,29), caractérisé en ce que dans le cas de l'utilisation de pompes (2,3,28,29) possédant un volume de refoulement réglable à partir de la course nulle, au moins la pression différentielle de détection de charge est appliquée, dans chaque état de fonctionnement, par les régulateurs de pression et de débit (4,5,44,45) situés dans les canalisations de refoulement (7,8,30,31,51) des différentes pompes (2,3,28,29), et que les pressions différentielles de détection de charge pour les différentes pompes (2,3,28,29) sont agencées différemment de sorte que tout d'abord l'une des pompes (2,28) délivre l'écoulement de refoulement requis et que seulement lorsque la pompe atteint son angle maximum de pivotement, au moins une autre pompe (3,29) est activée et apporte sa contribution alors encore nécessaire, à l'écoulement de refoulement total.

2. Procédé selon la revendication 1, caractérisé en ce que la pression dans la canalisation respective de refoulement (7,8,31,51) des deux pompes (2,3,28,29) est contrôlée et un signal optique et/ou acoustique est délivré dans le cas d'une chute de pression dans l'état de fonctionnement de l'engin de travail.

3. Procédé selon les revendications 1 et 2, caractérisé en ce qu'on applique une pression différentielle de détection de charge de 12-20 bars.

4. Procédé selon la revendication 1 à 3, caractérisé en ce qu'on actionne les éléments (21,22,37,38,50), qui mesurent la pression et dont la pression de commutation est réglée à une valeur nettement inférieure à la pression de détection de charge.

5. Système de direction pour des engins de travail mobiles, notamment pour des chargeurs sur roues, des niveleuses, des excavatrices mobiles ou analogues, comportant au moins deux pompes hydrauliques (28,29) pouvant être entraînées, au moins une transmission de direction (46), un ou plusieurs vérins de braquage (47,48) ainsi que des canalisations hydrauliques (30,31,51,32) qui relient entre eux les pompes (28,29), le mécanisme de direction (46) et le ou les vérins (47,48), les différentes canalisations hydrauliques (30,31,51) étant réunies pour former un conduit commun de refoulement (32), qui est relié au mécanisme de direction (46), tandis que des éléments antiretour (33,34,52) sont prévus dans les différentes canalisations hydrauliques (30,31,51), caractérisé en ce que les pompes (2,3,28,29) sont des pompes à cylindrée variable qui possèdent des régulateurs de pression et de débit (4,5,44,45), et que les régulateurs (4,5,44,45) des différentes pompes (2,3,28,29) sont réglables sur des pressions différentielles de détection de charge pouvant être prédéterminées, notamment différentes.

6. Système de braquage selon la revendication 5, caractérisé en ce qu'entre les différentes pompes (2,3,28, 29) et les éléments antiretour (19,20,30,31,51) sont disposés des avertisseurs de pression (21,22,23,34,52), notamment des interrupteurs manométriques, qui sont reliés au moyen de lignes correspondantes de transmission de signaux (23,24,39,40), à des dispositifs optiques et/ou acoustiques d'avertissement dans le panneau de commande de l'engin de travail.

7. Système de braquage selon une ou plusieurs des revendications 5 à 6, caractérisé en ce que dans la mesure où l'une des pompes (29) est entraînée par l'intermédiaire d'une partie de la section motrice, reliée de façon fixe aux roues de l'engin de travail et où également la capacité de braquage de l'engin de travail roulant doit être garantie dans les deux directions de déplacement, même après que le moteur d'entraînement est tombé en panne, au moins la pompe (29), qui est reliée à la section motrice, possède un agencement tel qu'elle peut délivrer son écoulement de refoulement lors de l'entraînement dans les deux sens de rotation.

8. Système de direction selon la revendication 7, caractérisé en ce que la pompe (29) délivre son écoulement de refoulement par l'intermédiaire d'une canalisation associée de refoulement (30 ou 31) à la canalisation commune (32), en fonction du sens de rotation respectif du volant (49).

9. Système de direction selon la revendication 8, caractérisé en ce que des éléments antiretour (33,34) et des dispositifs pour contrôler la pression, notamment des interrupteurs manométriques (37,38), sont prévus dans les deux canalisations de refoulement (30,31).

10. Système de braquage selon les revendications 7 à 9, caractérisé en ce que la pompe (29) aspire du fluide hydraulique à partir du réservoir (36) par l'intermédiaire d'une canalisation (43), les canalisations de refoulement (30 et 31) étant reliées entre elles tandis que des soupapes d'aspiration aval (41,42) agencées en tant qu'éléments antiretour sont prévues dans les deux directions de sortie.
